# FASCICULE DE BREVET EUROPEEN

(11) **EP 2 393 165 B1**
(45) Date de publication et mention de la délivrance du brevet: **20.04.2016**
(21) Numéro de dépôt: 11168866.9
(22) Date de dépôt: 07.06.2011
(51) Int. Cl.: H01R 13/53, H01R 24/58, H02J 7/35, B60L 11/18, H01R 13/44, H02J 7/00

(54) **Ensemble de raccordement electrique**
Anordnung für ein elektrisches Verbinden
assembly for electrical connection

(30) Priorité: 07.06.2010 FR 1054447
(43) Date de publication de la demande: 07.12.2011
(73) Titulaire: Multi-Holding AG, 4123 Allschwil (CH)
(72) Inventeur: Hengel, Christian, 68720 Hochstatt (FR); Feron, Jérôme, 68640 Waldighoffen (FR); Chabirand, Michel, 68540 Bollwiller (FR); Tiberghien, Alain-Christophe, 74320 Sevrier (FR); Guin, Philippe, 74000 Annecy (FR)
(74) Mandataire: Myon, Gérard Jean-Pierre

(56) Documents cités:
- WO-A2-2007/045792
- GB-A- 2 264 201
- US-A- 5 820 416
- US-A1- 2007 032 112
- US-B1- 7 041 918

## Description

La présente invention concerne un ensemble de raccordement électrique.

WO-A-2007/045792 décrit un poste de recharge et un véhicule électrique dans lequel le moteur électrique du véhicule est alimenté par une batterie électrique rechargée lors de l'arrêt du véhicule à proximité d'une station de recharge. La connexion électrique entre le véhicule et la station de recharge s'effectue par des moyens de connexion appartenant au poste de recharge et coopérant avec des moyens de connexion appartenant au véhicule.

GB-A-2 264 201 divulgue un ensemble de raccordement électrique qui comprend un élément mâle, comprenant deux fiches électriques conductrices, et un élément femelle qui comprend deux fourreaux conducteurs destinés à recevoir les fiches électriques. Un élément de protection recouvre les fiches et peut coulisser le long des fiches, à l'intérieur d'un corps de l'élément mâle. Lors de la connexion de l'élément mâle avec l'élément femelle, l'élément femelle repousse l'élément de protection, ce qui libère les fiches électriques qui s'engagent dans les fourreaux de l'élément femelle. L'ensemble de raccordement ne permet pas, lors de la connexion, de guider sans coincement l'élément mâle dans l'élément femelle en cas de défauts d'alignement de l'élément mâle par rapport à l'élément femelle. Le document GB-A-2 264 201 décrit le préambule de la revendication 1.

Le but de la présente invention est d'assurer, lors de la recharge du véhicule, une connexion et une déconnexion entre le véhicule et le poste de recharge rapide, fiable, sécurisée et automatique, malgré les défauts de positionnement relatif des moyens de connexion du véhicule par rapport aux moyens de connexion du poste de recharge qui résultent, notamment, de la dispersion de la position d'arrêt du véhicule par rapport à la station de recharge et du poids variable de la charge du véhicule.

A cet effet, l'invention concerne un ensemble de raccordement électrique comprenant un élément femelle, qui comporte au moins un contact électrique, et un élément mâle de raccordement électrique destiné à être emmanché dans l'élément femelle, l'élément mâle comprenant une fiche qui s'étend selon un axe longitudinal et un manchon qui entoure la fiche et qui est mobile par rapport à la fiche. La fiche ou le manchon comporte au moins un contact électrique destiné à venir en connexion électrique avec le contact électrique porté par l'élément femelle. Une surface extérieure de connexion du contact électrique de l'élément mâle est recouverte par le manchon ou la fiche dans une première position axiale du manchon par rapport à la fiche, et découverte dans une seconde position axiale du manchon par rapport à la fiche. Une surface radiale externe du manchon comporte au moins deux étages dont les diamètres diminuent en se rapprochant d'une extrémité libre de l'élément mâle. L'élément femelle comporte un corps dont la surface radiale interne comporte au moins deux étages dont les diamètres augmentent en se rapprochant d'une embouchure de l'élément femelle.

Selon l'invention, les surfaces externes des étages du manchon sont sensiblement complémentaires aux surfaces externes des étages de la surface interne du corps de l'élément femelle. De plus, lorsque le manchon est complètement emmanché dans l'élément femelle, l'étage de plus grand diamètre de l'élément mâle est engagé au niveau de l'étage de plus grand diamètre de l'élément femelle et l'étage de plus petit diamètre de l'élément mâle est engagé au niveau de l'étage de plus petit diamètre de l'élément femelle.

Ainsi, l'invention permet d'assurer, lors de la recharge du véhicule, une connexion et une déconnection du véhicule au poste de recharge automatique, rapide, fiable et sécurisée. Grâce àla coopération des étages, l'élément mâle est guidé dans l'élément femelle sans risque de coincement, et la protection des contacts assure la sécurité et la longévité de l'invention.

Selon des aspects avantageux mais non obligatoires de l'invention, un tel élément mâle de connexion peut incorporer une ou plusieurs des caractéristiques suivantes prises dans toute combinaison techniquement admissible :
- L'élément mâle comporte un élément de liaison pour la fixation à un support d'un élément formant une extrémité de la fiche ou du manchon opposée à l'extrémité libre. De plus, l'élément de liaison autorise un mouvement relatif, du support par rapport à la fiche ou au manchon, dans au moins une direction coupant l'axe longitudinal de la fiche. L'invention permet d'aligner axialement de manière automatique l'élément mâle avec l'élément femelle, malgré les défauts de positionnement radiaux de l'élément mâle par rapport à l'élément femelle. Ainsi, des écarts de positionnement entre l'élément mâle et l'élément femelle sont tolérés, notamment les mouvements relatifs de l'élément mâle par rapport à l'élément femelle qui ont lieu quand les éléments sont connectés. De plus l'élément mâle peut être déconnecté de l'élément femelle sans altération, même si le mouvement de déconnexion n'est pas précis.
- L'élément de liaison est un élément élastiquement déformable, pouvant être un ressort.
- L'élément de liaison s'articule avec la fiche ou le manchon.
- L'élément de liaison est creux pour le passage à l'intérieur d'au moins un câble électrique.
- L'élément de liaison s'étend globalement axialement le long de l'axe longitudinal de la fiche.
- Des moyens élastiques sont aptes à rappeler l'élément de liaison dans une position initiale où l'élément de liaison s'étend globalement selon l'axe longitudinal de la fiche.
- L'élément mâle comprend des moyens disposés axialement entre le manchon et un élément d'extrémité de la fiche pour le rappel élastique du manchon vers la première position du manchon par rapport à la fiche. Ainsi, le manchon se replace de manière automatique dans sa première position.
- L'élément mâle comprend au moins deux contacts électriques sous la forme de pistes conductrices annulaires disposées en parallèle le long de l'axe longitudinal de la fiche.
- Au moins un contact électrique de l'élément mâle est ménagé au niveau d'une surface radiale externe de la fiche. De cette manière, la compacité de l'élément mâle est optimisée.
- La fiche dépasse axialement du manchon et constitue l'extrémité libre de l'élément mâle. Ainsi, l'élément mâle est guidé vers l'élément femelle sans risque de découvrir les contacts, ce qui favorise la sécurité et la durée de vie de l'invention.
- L'élément femelle comporte un clapet mobile axialement, par rapport au corps de l'élément femelle, entre une première position, où le clapet recouvre le contact électrique de l'élément femelle, et une deuxième position, où le contact électrique est découvert par le clapet.
- Le clapet comporte une extrémité axiale disposée côté embouchure et qui est en matériau conducteur et une extrémité de la fiche disposée du côté de l'extrémité libre de l'élément mâle comprend une partie conductrice. Cette caractéristique optimise la compacité de l'invention et favorise la sécurité.
- L'ensemble de raccordement comprend au moins un capteur qui détecte le clapet mobile dans sa deuxième position et/ou le manchon dans une configuration complètement emmanchée dans l'élément femelle et une unité de commande est apte à contrôler l'alimentation électrique d'au moins un contact électrique porté par l'élément femelle en fonction du signal de sortie du ou de chaque capteur. Ces caractéristiques contribuent à la sécurité de l'invention.
- En configuration complètement emmanchée du manchon dans l'élément femelle, la longueur axiale de recouvrement entre l'étage de plus grand diamètre du manchon et l'étage de plus grand diamètre du corps de l'élément femelle est supérieure à la longueur axiale de recouvrement entre l'étage de plus petit diamètre du manchon et l'étage de plus petit diamètre du corps de l'élément femelle. Cette caractéristique assure un guidage sans coincement de l'élément mâle dans l'élément femelle.
- L'un des éléments mâle ou femelle est en liaison électrique avec une batterie et l'autre élément femelle ou mâle est en liaison électrique avec une source d'énergie électrique pouvant être un condensateur ou un réseau de distribution électrique.
- L'un des éléments mâle ou femelle est monté sur un véhicule et l'autre élément femelle ou mâle est monté sur une station de recharge fixe.
- L'élément mâle ou femelle qui est monté sur le véhicule comprend au moins un contact électrique supplémentaire en liaison avec une unité de commande du véhicule.

L'invention sera mieux comprise et d'autres avantages de celle-ci apparaîtront plus clairement à la lumière de la description qui va suivre d'un élément mâle de raccordement électrique, d'un véhicule à moteur électrique équipé d'un tel élément mâle et d'un ensemble de raccordement électrique composé d'un tel élément mâle et d'un élément femelle appartenant à une station de recharge fixe, donnée uniquement à titre d'exemple et faite en référence aux dessins annexés dans lesquels :
- la figure 1 est une vue de dessus d'un véhicule de type bus et d'une station de recharge respectivement équipés d'un élément mâle de raccordement électrique conforme à l'invention et d'un élément femelle appartenant à un ensemble de raccordement électrique conforme à l'invention ;
- la figure 2 est une vue à plus grande échelle du détail II à la figure 1, d'une première configuration de l'ensemble de raccordement, lors du raccordement électrique entre l'élément mâle et l'élément femelle ;
- les figures 3 et 4 sont respectivement des vues à plus grande échelle des détails III et IV à la figure 2 ;
- la figure 5 est une coupe analogue à la figure 2 d'une deuxième configuration, successive à la première ;
- la figure 6 est une coupe analogue à la figure 2 d'une troisième configuration, successive à la deuxième ;
- la figure 7 est une coupe analogue à la figure 2 d'une quatrième configuration, successive à la troisième, dans laquelle les éléments de l'ensemble de raccordement sont électriquement raccordés ; et
- la figure 8 est une vue à plus grande échelle du détail VIII à la figure 7.

Dans la description ci-dessous, on qualifie de conducteurs les éléments aptes à transmettre un courant électrique, comme par exemple les éléments métalliques. De même, on qualifie d'isolants les éléments qui ne laissent pas passer le courant électrique. Enfin, le qualificatif axial est relatif à l'axe longitudinal de l'élément considéré.

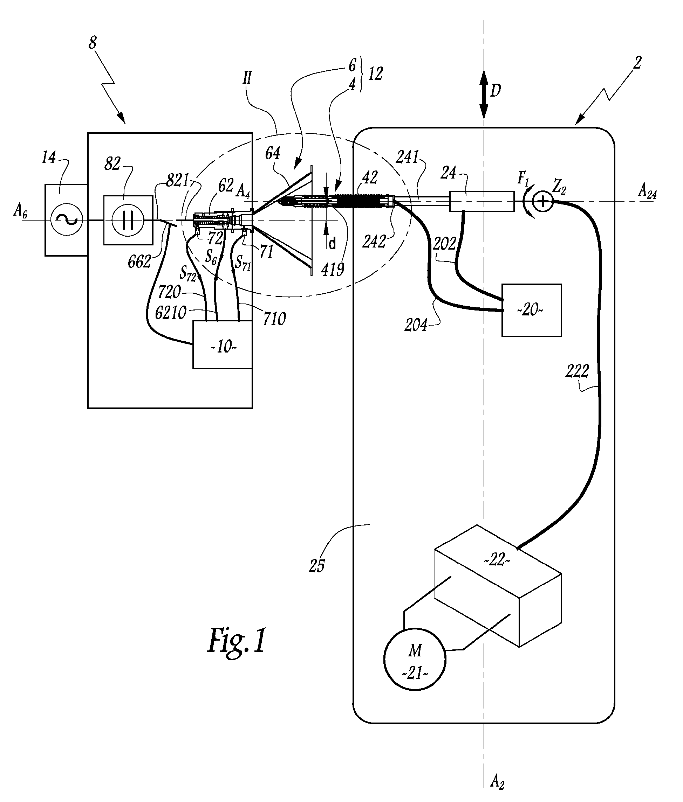

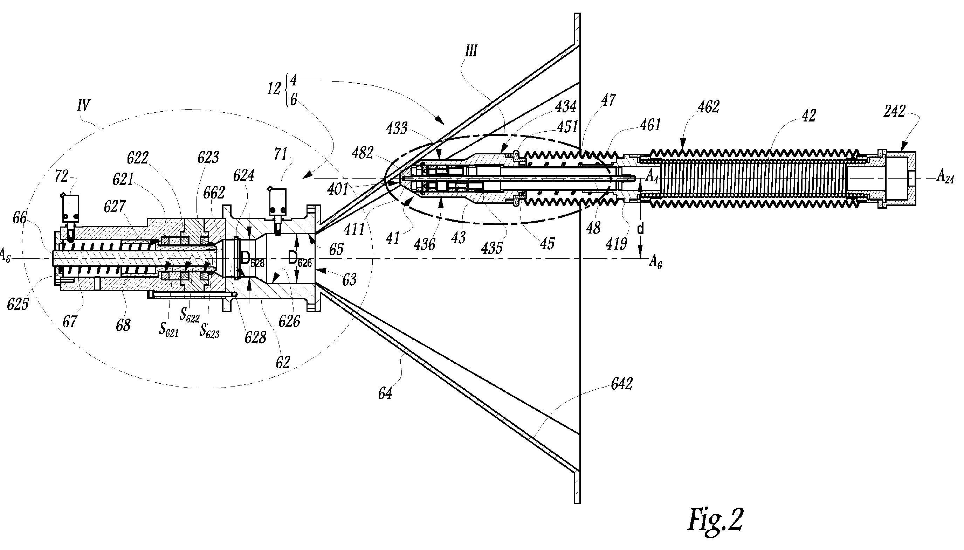

La figure 1 montre un véhicule 2 de type bus, muni d'un élément mâle 4 de raccordement électrique d'axe longitudinal A₄. On note A₂ l'axe longitudinal du véhicule 2, selon lequel est orientée sa direction d'avance D. Le véhicule 2 est muni d'une batterie électrique 22 qui alimente un moteur électrique 21 pour l'avance du véhicule 2. L'élément mâle 4 est connecté électriquement à la batterie 22 par des moyens filaires 222 et est relié à l'extrémité mobile 242 d'un actionneur 24 d'axe longitudinal A₂₄, par l'intermédiaire d'un ressort 42 hélicoïdal droit. Le ressort 42 s'étend globalement le long de l'axe A₄ lorsque l'élément mâle (4) est en configuration déconnectée, comme le montrent les figures 1 et 2. A la figure 1, les axes A₄ et A₂₄ sont confondus. L'actionneur 24 est un vérin dont la tige 241 a son extrémité 242 mobile en translation selon l'axe A₂₄. L'actionneur 24 est en liaison pivot autour d'un axe Z₂ perpendiculaire au toit 25 du véhicule 2 et vertical lorsque le véhicule repose sur un sol plan horizontal, si bien que l'axe A₂₄ est mobile dans un plan parallèle au toit 25 du véhicule 2.

Une unité de commande 20 appartenant au véhicule 2 est en liaison électrique avec l'actionneur 24, par l'intermédiaire des moyens filaires 202, et en liaison électrique avec l'élément mâle 4, par l'intermédiaire des moyens filaires 204.

Un ressort de torsion non représenté est raccordé à l'actionneur 24 et est apte à positionner l'élément mâle 4, lorsqu'il n'est pas en cours de raccordement électrique, dans une position initiale dans laquelle l'axe A₄ de l'élément mâle 4 est perpendiculaire à l'axe A₂ du véhicule 2. Ce mouvement se produit selon l'une des directions de la double flèche F₁ de la figure 1.

Un élément femelle 6 d'axe longitudinal A₆ appartient à une station de recharge fixe 8, disposée à proximité d'une station de bus, et comporte un cône d'entrée 64 rapporté sur un corps 62 de l'élément femelle 6. Le cône d'entrée 64 comporte une surface interne 642. L'axe A₆ et les axes A₄ et A₂₄ sont parallèles et séparés par un décalage d. Ce décalage d est la projection sur le plan des figures du décalage entre les axes A₄ et A₆. En pratique, un désalignement ou décalage des axes A₄ et A₆ peut apparaître lorsque le véhicule 2 s'arrête un peu avant ou après la station de recharge 8, lorsque l'axe A₂ du véhicule immobilisé n'est pas perpendiculaire à l'axe A₆, lorsque les passagers montent ou descendent en faisant vaciller le véhicule 2 et/ou lorsque la route est inclinée par rapport à l'axe A₆. Le décalage d représenté aux figures 1 et 2 correspond à un cas particulier où A₄ et A₆ sont parallèles avant raccordement, mais un décalage angulaire est possible.

La station fixe 8 comporte un condensateur 82 relié à l'élément femelle 6 par des moyens filaires 821 de liaison électrique. Une unité de commande 10 contrôle un interrupteur 662, disposé au niveau des moyens filaires 821, qui connecte sélectivement le condensateur 82 et l'élément femelle 6. Le condensateur 82 est sélectivement relié à et alimenté par un réseau électrique 14 pouvant être en pratique un réseau de distribution électrique basse tension. L'unité de commande 10 commande l'interrupteur 662 en fonction de signaux S₇₁ et S₇₂ transmis à l'unité de commande 10 au moyen de câbles électriques 710 et 720 et délivrés respectivement par des capteurs 71 et 72.

Un câble 6210 relie électriquement l'unité de commande 10 à l'élément femelle 6.

Les éléments 4 et 6 forment ensemble un ensemble de raccordement électrique 12 permettant de relier électriquement et sélectivement le condensateur 82 à la batterie 22, ou plus généralement de relier une source d'énergie électrique à la batterie 22.

Les figures 2 et 5 à 8 représentent quatre configurations successives de l'ensemble de raccordement 12 lors du raccordement électrique de l'élément mâle 4 dans l'élément femelle 6.

Lors d'une étape d'approche non représentée, à l'issue de laquelle l'élément mâle 4 est en contact mécanique avec l'élément femelle 6, comme le montre la configuration de l'ensemble de raccordement visible à la figure 2, le véhicule 2 arrive au niveau de la station fixe 8 selon la direction D et s'immobilise à ce niveau.

Ensuite, l'unité de commande 20 du véhicule 2 pilote l'actionneur 24, au moyen d'un signal transmis par l'intermédiaire des moyens filaires 202 pour qu'il translate son extrémité mobile 242 selon l'axe A₂₄ en direction de l'élément femelle 6 jusqu'à l'établissement d'un contact mécanique entre l'élément mâle et la surface interne 642 du cône d'entrée 64 de l'élément femelle 6. Le contact mécanique s'établit en un point décalé de l'axe A₆ de l'élément femelle du fait du décalage d. La figure 2 représente l'ensemble de raccordement électrique 12 à l'issue de l'étape d'approche décrite ci-dessus. Les éléments mâle 4 et femelle 6 sont alors en configuration déconnectée.

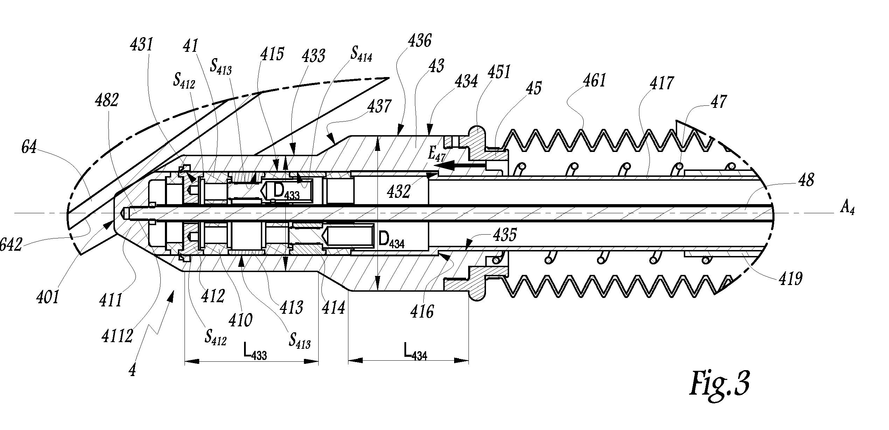

Comme le montre plus particulièrement la figure 3, l'élément mâle 4 comprend une fiche 41 entourée par un manchon 43. L'axe longitudinal A₄ de l'élément mâle 4 est un axe central commun au manchon 43 et à la fiche 41. Une surface radiale interne 435 du manchon 43 est munie d'un épaulement 432 et une surface radiale externe 436 du manchon comporte deux étages 433 et 434. Les étages 433 et 434 sont des surfaces radiales externes cylindriques à sections circulaires, de longueurs axiales respectives L₄₃₃ et L₄₃₄ et de diamètres respectifs D₄₃₃ et D₄₃₄, raccordées l'une à l'autre par une surface 437 tronconique. L'étage 433 est situé au voisinage d'une extrémité libre 401 de l'élément mâle 4, destinée à être emmanchée en premier dans l'élément femelle 6, et a un diamètre externe plus petit que celui de l'étage 434. L'étage 434 est plus éloigné de l'extrémité libre 401 que l'étage 433 et a une longueur L₄₃₄ plus petite que la longueur L₄₃₃.

La fiche 41 est formée par un tube 410 en matériau électriquement isolant dont l'extrémité située du côté de l'extrémité libre 401 est obstruée par un bouchon 411 tronconique et conducteur dont la section se réduit en se rapprochant de l'extrémité libre 401. Le bouchon 411 forme l'extrémité libre 401 de l'élément 4 en dépassant axialement du manchon 43. L'extrémité du tube 410, opposée à l'extrémité libre 401, est solidaire d'une entretoise 417 qui comporte un épaulement 416 et sur laquelle est rapporté un support d'extrémité 419. Le tube isolant 410, le bouchon conducteur 411, l'entretoise 417 et le support d'extrémité 419 sont solidaires et constituent ensemble la fiche 41.

La longueur axiale du ressort 42 est globalement de l'ordre de la longueur axiale de la fiche 41, c'est-à-dire de l'ordre de la distance entre l'extrémité libre 401 de l'élément mâle 4 et le support d'extrémité 419.

En configuration déconnectée, la zone de fixation du ressort 42 sur le support d'extrémité 419 est décalée axialement selon l'axe A₄ en direction de l'extrémité libre 401 de l'élément mâle 4 par rapport à la zone de fixation du ressort 42 sur l'extrémité mobile 242 de l'actionneur 24.

La fiche 41 porte, au niveau de sa surface radiale externe 415, trois contacts électriques 412, 413 et 414, réalisés en métal. Les contacts électriques 412, 413 et 414 sont des pistes conductrices annulaires et d'axe A₄, disposés en parallèle le long de l'axe A₄, entretoisés par le tube isolant 410. Les contacts électriques 412, 413 et 414 ont des surfaces extérieures respectives S₄₁₂, S₄₁₃ et S₄₁₄ qui affleurent la surface externe 415 de la fiche 41.

Dans une première position axiale du manchon 43 par rapport à la fiche 41 représentée aux figures 1 à 3, 5 et 6, les surfaces extérieures S₄₁₂, S₄₁₃ et S₄₁₄ des contacts 412, 413 et 414 sont recouvertes par le manchon 43. Le recouvrement des contacts 412, 413 et 414 par le manchon 43 correspond à un recouvrement, dans la direction radiale, de la surface radiale externe 415 de la fiche 41 par la surface radiale interne 435 du manchon 43. Ce recouvrement est réalisé avec un jeu radial de fonctionnement qui permet au manchon 43 de coulisser axialement par rapport à la fiche 41.

Une butée 45, encastrée autour du manchon 43 au niveau d'une extrémité du manchon 43 opposée à l'extrémité libre 401, prolonge l'étage 434 du manchon 43 et comporte une portion annulaire externe 451 de diamètre externe supérieur au diamètre externe D₄₃₄ de l'étage 434 du manchon 43.

En configuration déconnectée de l'élément mâle 4, un ressort de rappel élastique 47 repousse le manchon 43 dans la première position axiale, par rapport à la fiche 41, dans laquelle la surface interne 435 du manchon 43 recouvre les contacts 412, 413 et 414 de la fiche 41, et dans laquelle l'épaulement 432 du manchon 43 est en appui contre l'épaulement 416 de l'entretoise 417. Le ressort 47 est intercalé axialement entre le support 419 de la fiche 41 et le manchon 43 et exerce sur le manchon 43 un effort axial E₄₇ dirigé vers l'extrémité libre 401.

Un joint d'étanchéité 431, disposé entre la fiche 41 et le manchon 43 sur la surface radiale interne 435 du manchon 43 et disposé plus proche de l'extrémité libre 401 de l'élément mâle 4 que les contacts 412, 413 et 414, forme une barrière étanche qui protège les contacts 412, 413 et 414 de l'élément mâle 4 vis-à-vis de pollutions externes, dans la première position du manchon 43.

L'extrémité mobile 242 de l'actionneur 24 est reliée par le ressort 42 au support 419. L'élément mâle 4 est monté flottant par rapport à l'extrémité mobile 242, en ce sens que l'élément mâle 4 peut s'incliner et/ou se désaligner par rapport à l'axe A₂₄ grâce à la flexion élastique du ressort 42. En position initiale de l'élément mâle 4, l'axe du ressort 42 est sensiblement aligné avec les axes A₄ et A₂₄ et les spires du ressort 42 sont jointives pour transmettre efficacement l'effort d'accouplement entre l'élément mâle 4 et l'élément femelle 6.

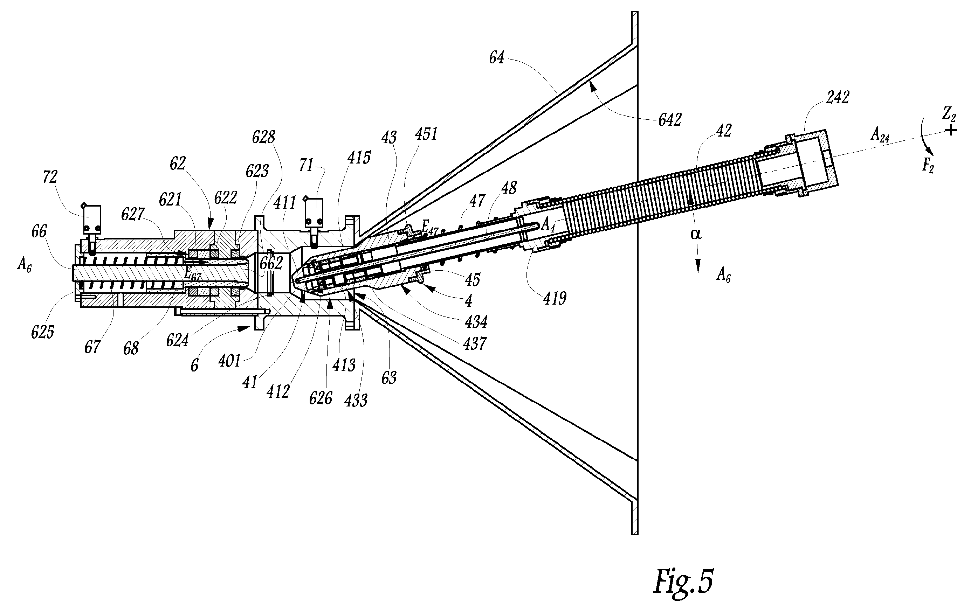

Un premier soufflet de protection 461, visible aux figures 2 et 3 mais non représenté aux figures 5 à 7, est placé autour du ressort 47. Une première extrémité du soufflet 461 enserre de manière étanche la butée 45 et une deuxième extrémité du soufflet 462 enserre de manière étanche le support 419. Un deuxième soufflet de protection 462 visible à la figure 2 mais non représenté aux figures 5 à 7 recouvre le ressort 42 et est intercalé de manière étanche, entre la fiche 41 et l'actionneur 24, d'un côté au support d'extrémité 419 et de l'autre à l'extrémité mobile 242 de l'actionneur 24. Les soufflets de protection 461 et 462 protègent ainsi de manière étanche l'élément mâle 4, d'une part entre le support 419 et le manchon 43, et d'autre part entre le support 419 et l'extrémité mobile 242 de l'actionneur 24.

Une tige de masse 48 en matériau conducteur est insérée dans l'élément mâle 4 à l'intérieur de la fiche 41 et du manchon 43. Une première extrémité 482 de la tige de masse 48 est vissée dans un taraudage 4112 du bouchon 411 et son autre extrémité 484 est reliée à une masse du véhicule 2, par un câble électrique non représenté.

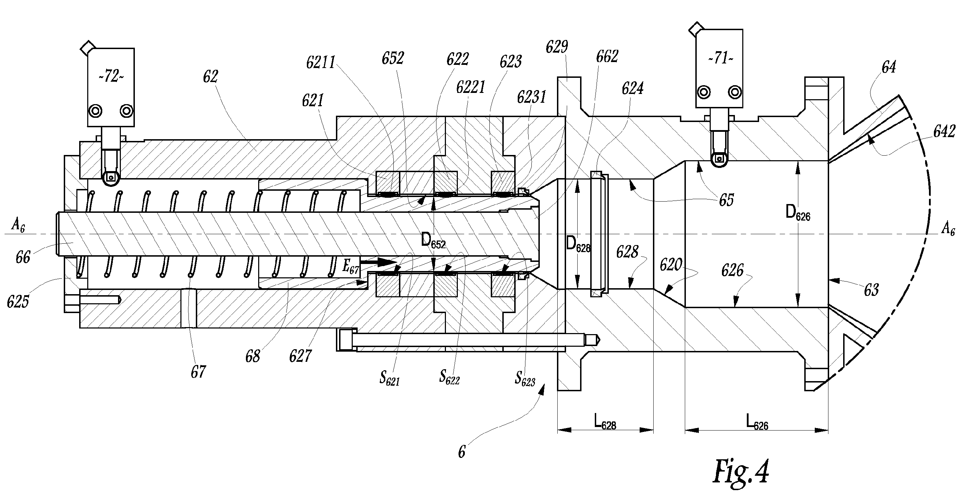

L'élément femelle 6 visible aux figures 2 et 4 à 8 est composé d'un corps isolant 62 sur lequel est rapportée, au niveau d'une embouchure 63 par laquelle l'élément mâle pénètre dans le corps 62, l'extrémité de petit diamètre du cône d'entrée 64 assemblé au corps 62 par des moyens non représentés, tels que des vis. La section, transversale par rapport à l'axe A₆, du cône d'entrée 64 augmente en s'éloignant axialement du corps 62 de l'élément femelle 6.

Une surface radiale interne 65 du corps 62 centrée sur l'axe A₆ comporte deux étages 626 et 628 qui sont deux surfaces cylindriques internes à sections circulaires dont les diamètres internes respectifs D₆₂₆ et D₆₂₈ augmentent en se rapprochant axialement de l'embouchure 63 de l'élément femelle 6. L'étage 626 a un diamètre D₆₂₆ plus grand que le diamètre D₆₂₈ de l'étage 628, et est axialement plus proche de l'embouchure 63. L'étage 626 a une longueur axiale L₆₂₆ plus grande que la longueur axiale L₆₂₈ de l'étage 628. Les étages 626 et 628 sont raccordés l'un à l'autre par une surface 620 tronconique.

Des contacts électriques conducteurs 621, 622 et 623 sous forme de pistes annulaires disposées en parallèle le long de l'axe A₆ et entretoisés par le corps 62 de l'élément femelle 6 sont situés sur la surface interne 65 de l'élément femelle 6 et sont plus éloignés axialement de l'embouchure 63 que les étages 626 et 628.

Une portion 652 de la surface interne 65 qui est située entre un fond 625 de l'élément femelle 6 et les étages 626 et 628 et qui porte les contacts 621, 622 et 623 a la géométrie d'un cylindre à section circulaire de diamètre D₆₅₂ plus petit que les diamètres D₆₂₆ et D₆₂₈ des étages 626 et 628.

Les surfaces extérieures respectives S₆₂₁, S₆₂₂ et S₆₂₃ des contacts électriques 621, 622 et 623 affleurent la surface interne 65 du corps 62 et portent des éléments conducteurs de contact annulaires 6211, 6221 et 6231, de type contact à lamelles, qui débordent légèrement radialement vers l'axe A₆ à l'intérieur de la portion 652 de la surface interne 65 de l'élément femelle 6.

Un clapet mobile 68 isolant est disposé à l'intérieur de l'élément femelle 6. Le clapet 68 est poussé vers l'embouchure 63 de l'élément femelle 6 par un ressort 67. Le ressort 67 est intercalé entre le fond 625 de l'élément femelle 6 et le clapet 68 et exerce sur le clapet 68 un effort axial E₆₇ dirigé vers l'embouchure 63. En configuration déconnectée de l'élément femelle 6, le clapet 68 est ainsi repoussé contre un épaulement interne 627 du corps 62 et recouvre radialement dans cette première position axiale par rapport au corps 62 les surfaces extérieures S₆₂₁, S₆₂₂ et S₆₂₃ des contacts 621, 622 et 623 de l'élément femelle 6.

Un joint 629 disposé axialement plus proche de l'embouchure 63 de l'élément femelle 6 que les contacts 621, 622, 623, et interposé entre le corps 62 de l'élément femelle 6 et le clapet 68 lorsqu'il est dans sa première position, forme une barrière étanche qui protège les contacts 621, 622 et 623.

Un joint d'étanchéité 624 s'étend sur le périmètre de l'étage 628 et protège les contacts 621, 622, 623, et 412, 413, 414, lorsque le manchon 43 est complètement emmanché dans l'élément femelle 6.

Une tige de masse 66 conductrice est insérée dans l'élément femelle 6 radialement à l'intérieur du clapet 68. La tige de masse 66 est affleurante, au niveau de son extrémité 662 tourné vers l'embouchure 63, à l'extrémité axiale du clapet 68 disposée du côté de l'embouchure 63. La tige 66 est reliée à une masse de la station de recharge 8 par un câble électrique non représenté.

Le corps 62 de l'élément femelle 6 est muni du premier capteur 71, au niveau de l'étage 626, et du deuxième capteur 72, dans le logement du clapet 68 à proximité du fond 625 du corps 62 de l'élément femelle 6.

Lors d'une première étape de connexion, successive à l'étape d'approche, dont l'issue est représentée à la figure 5, l'extrémité libre 242 de l'actionneur 24 continue sa translation selon l'axe A₂₄. Les efforts de contact entre l'extrémité libre 401 et le cône d'entrée 64 font pivoter l'axe A₂₄ autour de Z₂ vers l'embouchure 63, comme le montre la flèche F₂ à la figure 5, et déforment élastiquement le ressort 42, dans le cas où il y a un défaut d'alignement, non visible, dans un plan perpendiculaire à la figure 2. Cette déformation et ce pivotement permettent à l'élément mâle 4 de continuer d'avancer en direction du corps 62 de l'élément femelle 6 en ayant son extrémité libre 401 qui glisse le long de la surface interne 642 du cône d'entrée 64. A l'issue de la première étape, l'extrémité libre 401 et l'étage 433 du manchon 43 ont, au moins partiellement, pénétré dans le corps 62 de l'élément femelle 6 au niveau de l'étage 626, comme représenté à la figure 5, et l'axe A₄ de l'élément mâle 4 forme un angle α avec l'axe A₆ de l'élément femelle 6. L'angle α résulte du décalage d entre l'axe A₄ et l'axe A₆ visible à la figure 2.

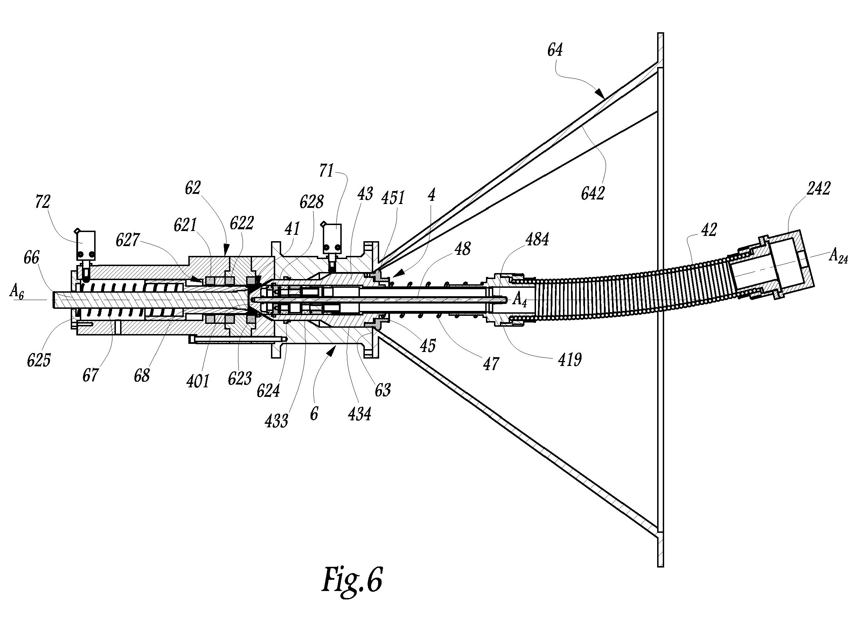

Lors d'une deuxième étape de connexion successive à la première et dont l'issue est représentée à la figure 6, l'actionneur 24 continue de translater l'extrémité mobile 242 selon l'axe A₂₄ en direction du corps 62 de l'élément femelle 6. L'extrémité libre 401 de l'élément mâle 4 progresse le long de la surface radiale interne étagée 65 de l'élément femelle 6 en direction du fond 625 et provoque la flexion du ressort 42 pour l'alignement progressif de l'axe A₄ de l'élément mâle 4 avec l'axe A₆ de l'élément femelle 6. D'abord, l'étage 433 pénètre l'étage 626, avec un jeu radial important entre les surfaces de ces deux étages. Ce jeu radial résulte de la différence des diamètres D₆₂₆ et D₄₃₃. Puis l'étage 434 s'engage dans l'étage 626 avec un jeu radial réduit et ensuite l'étage 433 s'engage dans l'étage 628 avec un jeu radial réduit, jusqu'à ce que le manchon 43 soit totalement emmanché dans le corps 62 de l'élément femelle 6.

Les surfaces externes des étages 433 et 434 du manchon 43 sont sensiblement complémentaires à celles des étages 626 et 628 de la surface interne 65 du corps 62. En d'autres termes, les étages 433 et 434 du manchon 43 ont sensiblement le même diamètre que les étages 626 et 628 du corps 62, au jeu fonctionnel près, de manière à permettre, d'une part, l'engagement des étages 433 et 434 au niveau des étages 626 et 628 et, d'autre part, le mouvement axial du manchon 43 par rapport au corps 62 de l'élément femelle 6. De plus, la portion 652 de la surface interne 65 de l'élément femelle 6 est complémentaire à la portion de la surface radiale externe 415 de la fiche 41 qui porte les contacts 412, 413 et 414.

Dans la configuration de la figure 6, la butée 45 du manchon 43 est en contact avec l'élément femelle 6, au niveau du cône d'entrée 64, et la portion annulaire 451 de la butée 45 bloque la translation du manchon 43 en direction du fond 625 du corps 62 de l'élément femelle 6. Dans cette configuration, le capteur 71 est activé, car repoussé par le manchon 43, et il détecte que le manchon 43 est en butée contre l'élément femelle 6 et donc complètement emmanché.

En configuration complètement emmanchée du manchon 43, l'étage 433 de plus petit diamètre de l'élément mâle 4 est emmanché au niveau de l'étage 628 de plus petit diamètre de l'élément femelle 6, et l'étage 433 recouvre l'étage 628 sur une longueur de recouvrement L_{433/628}. De même, dans cette configuration, l'étage 434 de plus grand diamètre de l'élément mâle 4 est emmanché au niveau de l'étage 626 de plus grand diamètre de l'élément femelle 6, et l'étage 434 recouvre l'étage 626 sur une longueur de recouvrement L_{434/626}. La longueur axiale de recouvrement L_{434/626} est plus grande que la longueur axiale de recouvrement L_{433/628}, ce qui permet de faire coopérer les étages 434 et 626 de plus grand diamètre avant les étages 433 et 628 de plus petit diamètre. De cette manière, lors du raccordement de l'élément mâle 4 dans l'élément femelle 6, le coincement de l'élément mâle 4 dans l'élément femelle 6 est évité et le guidage du manchon 43 dans l'élément femelle 6 est favorisé. La portion tronconique 437 de l'élément mâle 4 et la portion tronconique 620 de l'élément femelle 6 ont le même angle au sommet et permettent également d'éviter le coincement et favorisent le guidage du manchon 43 dans l'élément femelle 6 lors du raccordement.

Le joint 624 protège alors les contacts 621, 622 et 623 de l'élément femelle 6 en empêchant les corps étrangers et l'humidité de pénétrer dans l'élément femelle 6. En effet, l'étage 433 du manchon 43 coopère avec le joint 624 avant que le clapet 68 ne soit repoussé par la fiche 41 et que l'étanchéité entre le clapet 68 et le corps 62 au niveau du joint 629 ne soit rompue. Le ressort 42 est alors, si nécessaire, courbé et permet l'alignement de l'axe A₄ de l'élément mâle 4 avec l'axe A₆ de l'élément femelle 6, alors que l'axe A₂₄ de l'actionneur 24 est désaligné avec l'axe A₄, l'actionneur 24 continuant de transmettre un effort de connexion à l'élément mâle 4.

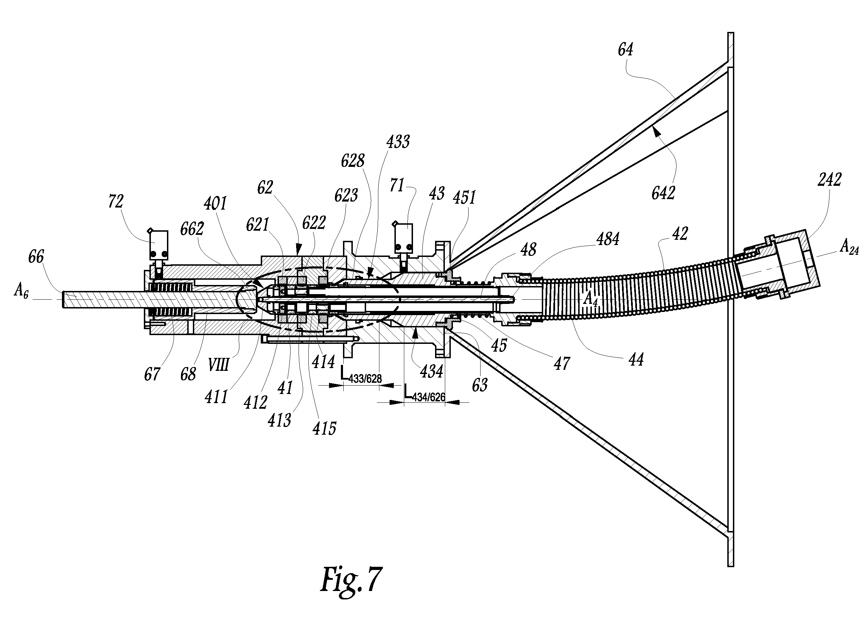

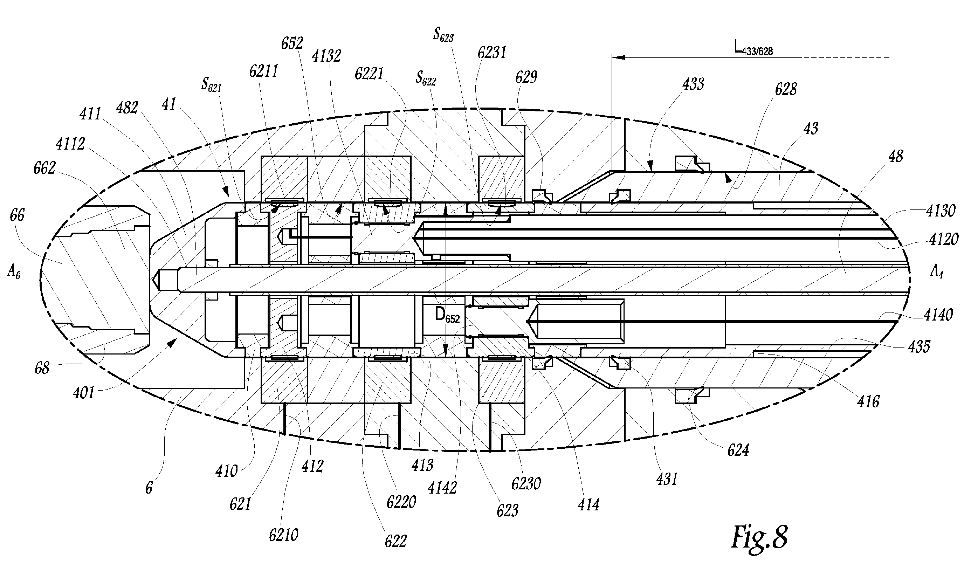

Dans une troisième étape de connexion, successive à la deuxième, dont l'issue est représentée à la figure 7, l'actionneur 24 continue de translater l'extrémité mobile 242 en direction du corps 62 de l'élément femelle 6 et exerce un effort antagoniste à l'effort E₄₇ qui comprime le ressort 47. Alors, la fiche 41 se déplace axialement par rapport au manchon 43 et continue sa translation en direction du fond 625 de l'élément femelle 6 jusqu'à ce que le support d'extrémité 419 vienne en butée contre le manchon 43. La fiche 41 a alors repoussé le clapet mobile 68 en direction du fond 625 de l'élément femelle 6 en comprimant le ressort 67 jusqu'à ce que le clapet mobile 68 arrive dans une seconde position axiale représentée aux figures 7 et 8 où il repousse et active le second capteur 72 et où le clapet 68 ne recouvre plus radialement les surfaces extérieures S₆₂₁, S₆₂₂ et S₆₂₃ des contacts 621, 622 et 623. Les contacts 621, 622 et 623 sont alors découverts.

Dans la configuration de raccordement mécanique des deux éléments 4 et 6 représentée aux figures 7 et 8, le manchon 43 se trouve dans la seconde position axiale par rapport à la fiche 41 et ne recouvre plus les contacts électriques 412, 413 et 414 de la fiche 41. Les contacts électriques 412, 413, et 414 sont alors découverts.

Un contact mécanique et électrique est établi entre les surfaces extérieures S₄₁₂ et S₆₂₁, S₄₁₃ et S₆₂₂, et S₄₁₄ et S₆₂₃ des contacts 412 et 621, 413 et 622, et 414 et 623 respectivement en regard, par l'intermédiaire des contacts à lamelles 6211, 6221 et 6231. Les lamelles des contacts à lamelles facilitent le contact mécanique car leur élasticité tolère les jeux angulaires et/ou radiaux pouvant se trouver entre les éléments mâle 4 et femelle 6.

L'actionneur 24 continue de fournir un effort suffisant pour maintenir les éléments de l'ensemble de raccordement électrique 12 dans leur position des figures 7 et 8, malgré les efforts antagonistes E₆₇ et E₄₇ des ressorts 67 et 47. Dans cette configuration, la tige de masse 48 de l'élément mâle 4 est en contact avec la tige de masse 66 de l'élément femelle 6, à travers le bouchon conducteur 411, et les masses de la station fixe 8 et du véhicule 2 sont reliées.

Lorsque les deux capteurs 71 et 72 sont activés, cela signifie que l'élément mâle 4 est raccordé mécaniquement de façon correcte dans l'élément femelle 6. Des signaux S₇₁ et S₇₂ délivrés respectivement par les capteurs 71 et 72 transmettent l'information de raccordement correct à l'unité de commande 10 au moyen des câbles 710 et 720 visibles à la figure 1.

Alors, l'unité de commande 10 contrôle la fermeture de l'interrupteur 662, ce qui ferme le circuit de charge décrit ci-dessous et alimente les contacts 622 et 623. La recharge du véhicule 2 commence à travers l'ensemble de raccordement 12.

Lors de la recharge, le condensateur 82 délivre de l'énergie électrique à la batterie 22 du véhicule 2 à travers une boucle formée par le circuit de charge suivant : l'énergie électrique est acheminée depuis une première borne du condensateur 82 jusqu'au contact 622 de l'élément femelle 6 au moyen du câble électrique 6220 . Comme le montre plus particulièrement la figure 3, les câbles 4130 et 4140 sont respectivement raccordés aux contacts 413 et 414 par des embouts 4132 et 4142 sur lesquels les câbles 4130 et 4140 sont soudés. Puis, l'énergie électrique est transférée dans l'élément mâle 4 au niveau du contact 413 et passe dans le câble électrique 4130, à l'intérieur de la fiche 41, du manchon 43, du support 419, du ressort 42, et de l'extrémité mobile 242 pour atteindre une première borne de la batterie 22. Le circuit de charge se referme depuis une seconde borne de la batterie 22 jusqu'à une seconde borne du condensateur 82, par l'intermédiaire du câble 4140, du contact 414, du contact 623 et du câble 6230.

Le câble 4140 forme avec le câble 4130 les moyens filaires 222, et le câble 6220 forme avec le câble 6230 les moyens filaires 821.

Pour la clarté du dessin, les câbles 4130, 4140, 6220 et 6230 sont représentés uniquement à la figure 8. Les contacts 621 et 412 sont dédiés à la communication d'informations relatives à la connexion de l'ensemble de raccordement 12, transmises par un signal S₆ qui transite entre les unités de commande 10 et 20. Ainsi, les contacts 621 et 412 permettent le contrôle de la masse en fin de raccordement mécanique préalablement à la fermeture de l'interrupteur 662, et le contrôle du mouvement de l'actionneur 24.

Les informations de connexion transitent entre l'unité de commande 10 et le contact 621 de l'élément femelle 6 au moyen du câble 6210. Les informations de connexion sont transférées entre l'élément femelle 6 et l'élément mâle 4 au niveau de l'interface électrique, formée par les contacts 621 et 412, et transitent par le câble 4120, logé à l'intérieur de la fiche 41 et du manchon 43, qui constitue les moyens filaires 204, reliant le contact 412 et l'unité de commande 20. Pour plus de clarté, les câbles électriques 6210 et 4120 sont représentés seulement à la figure 8.

L'unité de commande 10 interrompt la charge après dix secondes de charge en commandant l'ouverture de l'interrupteur 662 qui rompt l'alimentation électrique des contacts 622 et 623. Cette durée est réglable en fonction, notamment, de la capacité du condensateur 82.

De manière automatique, après interruption de la charge, l'unité de commande 20 commande l'actionneur 24 pour qu'il se rétracte, ce qui entraîne l'élément mâle 4 dans un mouvement inverse à celui effectué lors de la connexion : la fiche 41 se rétracte dans le manchon 43 et l'épaulement 416 de la fiche 41 bute contre l'épaulement 432 du manchon 43, le clapet mobile 68 est repoussé, par le ressort 67, en direction de l'embouchure 63 de l'élément femelle 6, les contacts électriques 621, 622, 623 et 412, 413, 414 redeviennent recouverts et protégés respectivement par le clapet 68 et par le manchon 43, l'élément mâle 4 sort de l'élément femelle 6 et l'élément mâle 4 est entraîné en direction de l'axe de rotation Z₂ de l'actionneur 24. Le ressort de torsion non représenté fait pivoter l'actionneur 24 autour de l'axe Z₂, entraînant l'élément mâle 4 dans la position initiale. Le véhicule 2 est alors prêt pour un prochain raccordement.

Dans le cas où le véhicule 2 quitte la station fixe 8 avant la fin de la durée de la charge, l'élément mâle 4 s'extrait de l'élément femelle 6 grâce au mouvement d'avance D du véhicule 2 transmis axialement, selon les axes A₆ et A₄ alors confondus, par le ressort 42. Ce mouvement de l'élément mâle 4 est détecté par les capteurs 71 et 72 et l'unité de commande 10 interrompt la charge, en pilotant l'ouverture de l'interrupteur 662, de manière à ce que le désaccouplement entre l'élément mâle 4 et l'élément femelle 6 s'effectue hors alimentation électrique des contacts 622 et 623, afin d'éviter la formation d'arcs électriques. Dès que le mouvement est détecté, les unités de commande 10 et 20 communiquent au moyen du signal S₆ et l'unité de commande 20 commande l'actionneur 24 de sorte que la partie mobile 242 se rétracte. Enfin, l'actionneur 24 est pivoté autour de l'axe Z₂ et ramène l'élément mâle 4 dans la position initiale.

Dans une variante non représentée, l'élément mâle 4 peut équiper la station de recharge 8 et l'élément femelle 6 peut équiper le véhicule 2.

Dans une autre variante non représentée de l'invention, la surface externe 436 du manchon 43 et la surface interne 65 complémentaire de l'élément femelle 6 peuvent comporter un même nombre d'étages supérieur ou égal à trois. Dans ce cas, les sections internes des étages de l'élément femelle 6 augmentent en se rapprochant axialement de l'embouchure 63 de l'élément femelle 6, et les sections externes des étages de l'élément mâle 4 diminuent en se rapprochant axialement de l'extrémité libre 401 de l'élément mâle 4.

Selon une autre variante non représentée de l'invention, chaque contact de l'élément mâle 4 peut être ménagé sur le manchon 43 en affleurant la surface radiale interne 435 du manchon 43, la fiche 41 servant alors à protéger et recouvrir radialement par l'intérieur le ou les contacts dans une première position du manchon 43 par rapport à la fiche 41 tandis que la fiche 41 peut être repoussée axialement dans une seconde position par rapport au manchon 43. Dans cette deuxième position, la fiche 41 ne recouvre plus les contacts 412, 413 et 414 de l'élément mâle. Selon cette variante, le manchon 43 est relié à l'extrémité mobile 242 de l'actionneur 24 par l'intermédiaire du ressort 42.

Comme décrit précédemment, l'élément mâle 4 comprend, pour sa fixation à l'actionneur 24, le ressort 42 qui est élastiquement flexible et qui autorise un mouvement relatif du support d'extrémité 242 par rapport à, la fiche 41 selon une direction qui coupe l'axe A₄. Toutefois, le ressort 42 peut être remplacé par un autre élément de liaison pouvant être un ressort de type polyuréthane, qui est également élastiquement déformable, ou être remplacé par un élément de liaison qui s'articule avec la fiche 41 ou le manchon 43 et/ou avec le support d'extrémité 242. Un tel élément de liaison articulé peut être, par exemple, un joint de type cardan ou un bras articulé. Quel que soit le moyen de liaison utilisé, le support 242 auquel l'élément de liaison relie la fiche 41 ou le manchon 43 a une possibilité de débattement relatif transversal par rapport à l'axe A₄. Le ressort 42 remplit intrinsèquement une fonction de rappel élastique de la fiche 41 de l'élément mâle 4 dans une position initiale où l'axe A₄ est globalement aligné avec l'axe longitudinal de l'élément de liaison et avec l'axe A₂₄. Toutefois, si le moyen de liaison utilisé n'assure pas cette fonction, un organe supplémentaire remplissant cette fonction peut être ajouté. En outre, quel que soit l'élément de liaison utilisé, il peut être prévu creux pour le passage d'au moins un câble électrique entouré de sa gaine isolante à l'intérieur.

Le véhicule 2 qui apparaît dans la description ci-dessus est un bus. Toutefois, la présente invention peut s'appliquer à tout véhicule mobile, terrestre ou non terrestre.

En outre, le récepteur électrique du véhicule 2 recevant l'énergie électrique lors de la charge peut ne pas être une batterie.

Dans la description ci-dessus et sur les figures, la fiche 41 est constituée de plusieurs parties solidaires les unes aux autres, ce qui en facilite l'usinage. Toutefois, la fiche 41 peut être monobloc. Sur les figures, le corps 62 de l'élément femelle 6 est constitué de plusieurs parties solidaires les unes aux autres. Toutefois, le corps 62 peut être monobloc.

Dans une configuration non représentée, l'élément femelle 6 peut équiper le véhicule 2 et être en liaison électrique avec la batterie 22, et l'élément mâle 4 peut équiper la station de recharge 8 et être en liaison électrique avec une source d'énergie électrique.

Eventuellement l'unité de commande 20 du véhicule 2 peut être en liaison avec des éléments du véhicule 2 autres que l'actionneur 24, par exemple des portes du véhicule 2, et commander ces éléments.

## Revendications

1. Ensemble de raccordement électrique (12), comprenant un élément femelle (6), qui comprend au moins un contact électrique (621 , 622, 623), et un élément mâle (4) destiné à être emmanché dans l'élément femelle (6), l'élément mâle (4) comprenant une fiche (41) qui s'étend selon un axe longitudinal (A₄), un manchon (43) qui entoure la fiche (41) et qui est mobile par rapport à la fiche (41) et au moins un contact électrique (412, 413, 414) qui est porté par la fiche (41) ou le manchon (43) et qui est destiné à venir en connexion électrique avec le contact électrique (621, 622, 623) porté par l'élément femelle (6), une surface extérieure de connexion (S₄₁₂, S₄₁₃, S₄₁₄) du contact électrique (412, 413, 414) de l'élément mâle (4) étant recouverte par le manchon (43) ou la fiche (41) dans une première position axiale du manchon (43) par rapport à la fiche (41), et découverte dans une seconde position axiale du manchon (43) par rapport à la fiche (41) et une surface radiale externe (436) du manchon (43) comportant au moins deux étages (433, 434) dont les diamètres (D₄₃₃, D₄₃₄) diminuent en se rapprochant d'une extrémité libre (401) de l'élément mâle (4), l'élément femelle (6) comportant un corps (62) dont la surface radiale interne (65) comporte au moins deux étages (626, 628) dont les diamètres (D₆₂₆, D₆₂₈) augmentent en se rapprochant d'une embouchure (63) de l'élément femelle (6), **caractérisé en ce que** les surfaces externes des étages (433, 434) du manchon (43) sont sensiblement complémentaires aux surfaces externes des étages (626, 628) de la surface interne (65) du corps (62) de l'élément femelle (6) et **en ce que** lorsque le manchon (43) est complètement emmanché dans l'élément femelle (6), l'étage (434) de plus grand diamètre (D₄₃₄) de l'élément mâle (4) est engagé au niveau de l'étage (626) de plus grand diamètre (D₆₂₆) de l'élément femelle (6) et l'étage (433) de plus petit diamètre (D₄₃₃) de l'élément mâle (4) est engagé au niveau de l'étage (628) de plus petit diamètre (D₆₂₈) de l'élément femelle (6).

2. Ensemble de raccordement électrique (12) selon la revendication 1, **caractérisé en ce que** l'élément mâle (4) comporte un élément de liaison (42) pour la fixation à un support (242) d'un élément (419) formant une extrémité de la fiche (41) ou du manchon (43) opposée à l'extrémité libre (401) et **en ce que** l'élément de liaison (42) autorise un mouvement relatif, du support (242) par rapport à la fiche (41) ou au manchon (43), dans au moins une direction coupant l'axe longitudinal (A₄) de la fiche (41).

3. Ensemble de raccordement électrique (12) selon la revendication 2, **caractérisé en ce que** l'élément de liaison (42) est un élément élastiquement déformable, pouvant être un ressort.

4. Ensemble de raccordement électrique (12) selon la revendication 2, **caractérisé en ce que** l'élément de liaison (42) s'articule avec la fiche (41) ou le manchon (43).

5. Ensemble de raccordement électrique (12) selon l'une des revendications 2 à 4, **caractérisé en ce que** l'élément de liaison (42) est creux pour le passage à l'intérieur d'au moins un câble électrique (4120, 4130, 4140).

6. Ensemble de raccordement électrique (12) selon l'une des revendications 2 à 5, **caractérisé en ce que** l'élément de liaison (42) s'étend globalement axialement le long de l'axe longitudinal (A₄) de la fiche (41).

7. Ensemble de raccordement électrique (12) selon l'une des revendications 2 à 6, **caractérisé en ce que** des moyens élastiques sont aptes à rappeler l'élément de liaison (42) dans une position initiale où l'élément de liaison (42) s'étend globalement selon l'axe longitudinal (A₄) de la fiche (41).

8. Ensemble de raccordement électrique (12) selon l'une des revendications précédentes, **caractérisé en ce que** l'élément mâle (4) comprend des moyens (47) disposés axialement entre le manchon (43) et un élément d'extrémité (419) de la fiche (41) pour le rappel élastique (E₄₇) du manchon (43) vers la première position du manchon (43) par rapport à la fiche (41).

9. Ensemble de raccordement électrique (12) selon l'une des revendications précédentes, **caractérisé en ce que** l'élément mâle (4) comprend au moins deux contacts électriques sous la forme de pistes conductrices annulaires (412, 413, 414) disposées en parallèle le long de l'axe (A₄).

10. Ensemble de raccordement électrique (12) selon l'une des revendications précédentes, **caractérisé en ce qu'**au moins un contact électrique (412, 413, 414) de l'élément mâle (4) est ménagé au niveau d'une surface radiale externe (415) de la fiche (41).

11. Ensemble de raccordement électrique (12) selon l'une des revendications précédentes, **caractérisé en ce que** la fiche (41) dépasse axialement du manchon (43) et constitue l'extrémité libre (401) de l'élément mâle (4).

12. Ensemble de raccordement électrique (12) selon l'une des revendications précédentes, **caractérisé en ce que** l'élément femelle (6) comporte un clapet (68) mobile axialement, par rapport au corps (62) de l'élément femelle (6), entre une première position, où le clapet (68) recouvre le contact électrique (621, 622, 623) de l'élément femelle (6), et une deuxième position, où le contact électrique est découvert par le clapet (68).

13. Ensemble de raccordement électrique (12) selon la revendication 12 **caractérisé en ce que** le clapet (68) comporte une extrémité axiale (662) disposée côté embouchure (63) et qui est en matériau conducteur et **en ce qu'**une extrémité de la fiche (41) disposée du côté de l'extrémité libre (401) de l'élément mâle (4) comprend une partie conductrice (411).

14. Ensemble de raccordement électrique (12) selon l'une des revendications 12 ou 13, **caractérisé en ce qu'**il comprend au moins un capteur (71, 72) qui détecte le clapet mobile (68) dans sa deuxième position et/ou le manchon (43) dans une configuration complètement emmanchée dans l'élément femelle (6) et **en ce qu'**une unité de commande (10) est apte à contrôler l'alimentation électrique d'au moins un contact électrique (621, 622, 623) en fonction du signal de sortie (S₇₁, S₇₂) de chaque capteur (71, 72).

15. Ensemble de raccordement électrique (12) selon l'une des revendications précédentes, **caractérisé en ce que**, en configuration complètement emmanchée du manchon (43) dans l'élément femelle (6), la longueur axiale de recouvrement (L_{434/626}) entre l'étage (434) de plus grand diamètre (D₄₃₄) du manchon (43) et l'étage (626) de plus grand diamètre (D₆₂₆) du corps (62) de l'élément femelle (6) est supérieure à la longueur axiale de recouvrement (L_{433/628}) entre l'étage (433) de plus petit diamètre (D₄₃₃) du manchon (43) et l'étage de plus petit diamètre (D₆₂₈) du corps (62) de l'élément femelle (6).

16. Ensemble de raccordement électrique (12) selon l'une des revendications précédentes, **caractérisé en ce que** l'un des éléments mâle (4) ou femelle (6) est en liaison électrique avec une batterie (22) et l'autre élément femelle (6) ou mâle (4) est en liaison électrique avec une source d'énergie électrique (14) pouvant être un condensateur ou un réseau de distribution électrique.

17. Ensemble de raccordement électrique (12) selon l'une des revendications précédentes, **caractérisé en ce que** l'un des éléments mâle (4) ou femelle (6) est monté sur un véhicule (2) et l'autre élément femelle (6) ou mâle (4) est monté sur une station de recharge fixe (8).

18. Ensemble de raccordement électrique (12) selon la revendication 17, **caractérisé en ce que** l'élément mâle (4) ou femelle (6) qui est monté sur le véhicule (2) comprend au moins un contact électrique supplémentaire en liaison avec une unité de commande (20) du véhicule (2).

## Patentansprüche

1. Anordnung (12) zur elektrischen Verbindung, umfassend ein Aufnahmeelement (3), das mindestens einen elektrischen Kontakt (621, 622, 623) umfasst, und ein Einsteckelement (4), das vorgesehen ist, in das Aufnahmeelement eingesetzt zu werden, wobei das Einsteckelement (4) einen Steckverbinder (41), der sich gemäß einer Längsachse (A₄) erstreckt, eine Hülse (43), die den Steckverbinder (41) umgibt und die in Bezug auf den Steckverbinder (41) beweglich ist, und mindestens einen elektrischen Kontakt (412, 413, 414) umfasst, der von dem Steckverbinder (41) oder der Hülse (43) getragen wird und der vorgesehen ist, in elektrische Verbindung mit dem von dem Aufnahmeelement (6) getragenen elektrischen Kontakt (621, 622, 623) zu kommen, wobei eine äußere Verbindungsfläche (S₄₁₂, S₄₁₃, 5₄₁₄) des elektrischen Kontaktes (412, 413, 414) des Einsteckelements (4) von der Hülse (43) oder dem Steckverbinder (41) in einer ersten axialen Position der Hülse (43) in Bezug auf den Steckverbinder (41) bedeckt ist und in einer zweiten axialen Position der Hülse (43) in Bezug auf den Steckverbinder (41) unbedeckt ist und wobei eine äußere radiale Fläche (436) der Hülse (43) mindestens zwei Stufen (433, 434) aufweist, deren Durchmesser (D₄₃₃, D₄₃₄) sich bei Annäherung an ein freies Ende des Einsteckelements (4) verringern, und das Aufnahmeelement (6) einen Körper (62) aufweist, dessen radiale Innenfläche (65) mindestens zwei Stufen (626, 628) aufweist, deren Durchmesser (D₆₂₆, D₆₂₈) sich bei Annäherung an eine Mündung (63) des Aufnahmeelements (6) vergrößern,
**dadurch gekennzeichnet, dass** die Außenflächen der Stufen (433, 434) der Hülse (43) im Wesentlichen komplementär zu den Außenflächen der Stufen (626, 628) der Innenfläche (65) des Körpers (62) des Aufnahmeelements (6) sind und dass, wenn die Hülse (43) vollständig in das Aufnahmeelement (6) eingesetzt ist, die Stufe (434) mit dem größeren Durchmesser (D₄₃₄) des Einsteckelements (4) an der Stufe (626) mit dem größeren Durchmesser (D₆₂₆) des Aufnahmeelements (6) anliegt und die Stufe (433) mit dem kleineren Durchmesser (D₄₃₃) des Einsteckelements (4) an der Stufe (628) mit dem kleineren Durch-messer (D₆₂₈) des Aufnahmeelements (6) anliegt.

2. Anordnung (12) zur elektrischen Verbindung nach Anspruch 1, **dadurch gekennzeichnet, dass** das Einsteckelement (4) ein Verbindungselement (42) für die Befestigung an einem Träger (242) eines Elements (419), das ein entgegengesetzt zum freien Ende (401) liegendes Ende des Steckverbinders (41) oder der Hülse (43) bildet, aufweist und dass das Verbindungselement (42) eine relative Bewegung des Trägers (242) in Bezug auf den Steckverbinder (41) oder die Hülse (43) in mindestens eine Richtung gestattet, die die Längsachse (A₄) des Steckverbinders (41) schneidet.

3. Anordnung (12) zur elektrischen Verbindung nach Anspruch 2, **dadurch gekennzeichnet, dass** das Verbindungselement (42) ein elastisch verformbares Element ist und eine Feder sein kann.

4. Anordnung (12) zur elektrischen Verbindung nach Anspruch 2, **dadurch gekennzeichnet, dass** das Verbindungselement (42) mit dem Steckverbinder (41) oder der Hülse (43) gelenkig verbunden ist.

5. Anordnung (12) zur elektrischen Verbindung nach einem der Ansprüche 2 bis 4, **dadurch gekennzeichnet, dass** das Verbindungselement (42) für den Durchgang mindestens eines elektrischen Kabels (4120, 4130, 4140) im Inneren hohl ist.

6. Anordnung (12) zur elektrischen Verbindung nach einem der Ansprüche 2 bis 5, **dadurch gekennzeichnet, dass** das Verbindungselement (42) sich im Ganzen gesehen axial entlang der Längsachse (A₄) des Steckverbinders (41) erstreckt.

7. Anordnung (12) zur elektrischen Verbindung nach einem der Ansprüche 2 bis 6, **dadurch gekennzeichnet, dass** die elastischen Mittel geeignet sind, das Verbindungselement (42) in eine Ausgangsposition zurückzubringen, in der sich das Verbindungselement (42) im Wesentlichen gemäß der Längsachse (A₄) des Steckverbinders (41) erstreckt.

8. Anordnung (12) zur elektrischen Verbindung nach einem der vorhergehenden Ansprüche, **dadurch gekennzeichnet, dass** das Einsteckelement (4) Mittel (47) zur elastischen Rückstellung (E₄₇) der Hülse (43) in die erste Position der Hülse (43) in Bezug auf den Steckverbinder (41) umfasst, die axial zwischen der Hülse (43) und einem Endelement (419) des Steckverbinders (41) angeordnet sind.

9. Anordnung (12) zur elektrischen Verbindung nach einem der vorhergehenden Ansprüche, **dadurch gekennzeichnet, dass** das Einsteckelement (4) mindestens zwei elektrische Kontakte in Form von ringförmigen leitenden Bahnen (412, 413, 414) umfasst, die parallel entlang der Achse (A₄) angeordnet sind.

10. Anordnung (12) zur elektrischen Verbindung nach einem der vorhergehenden Ansprüche, **dadurch gekennzeichnet, dass** mindestens ein elektrischer Kontakt (412, 413, 414) des Einsteckelements auf der Höhe einer radialen Außenfläche (415) des Steckverbinders (41) eingearbeitet ist.

11. Anordnung (12) zur elektrischen Verbindung nach einem der vorhergehenden Ansprüche, **dadurch gekennzeichnet, dass** der Steckverbinder (41) die Hülse (43) axial überragt und das freie Ende (401) des Einsteckelements (4) bildet.

12. Anordnung (12) zur elektrischen Verbindung nach einem der vorhergehenden Ansprüche, **dadurch gekennzeichnet, dass** das Aufnahmeelement (6) ein Ventil (68) aufweist, das axial in Bezug auf den Körper (62) des Aufnahmeelements (6) zwischen einer ersten Position, in der das Ventil (68) den elektrischen Kontakt (621, 622, 623) des Aufnahmeelements (6) überdeckt, und einer zweiten Position, in der der elektrische Kontakt durch das Ventil (68) nicht bedeckt ist, beweglich ist.

13. Anordnung (12) zur elektrischen Verbindung nach Anspruch 12,
**dadurch gekennzeichnet, dass** das Ventil (68) ein axiales Ende (662) aufweist, das an der Mündungsseite (63) angeordnet ist und das aus einem leitenden Material besteht, und dass ein Ende des Steckverbinders (41), das an dem freien Ende (401) des Einsteckelements (4) liegt, einen leitenden Bereich (411) umfasst.

14. Anordnung (12) zur elektrischen Verbindung nach einem der Ansprüche 12 oder 13, **dadurch gekennzeichnet, dass** sie mindestens einen Sensor (71, 72) umfasst, der das bewegliche Ventil (68) in seiner zweiten Position und/oder die Hülse (43) in einer vollständig in das Aufnahmeelement (6) eingesteckten Stellung detektiert, und dass eine Steuereinheit (10) geeignet ist, die elektrische Versorgung mindestens eines elektrischen Kontakts (621, 622, 623) abhängig vom Ausgangssignal (S₇₁, S₇₂) jedes Sensors (71, 72) zu steuern.

15. Anordnung (12) zur elektrischen Verbindung nach einem der vorhergehenden Ansprüche, **dadurch gekennzeichnet, dass** in der vollständig in das Aufnahmeelement (6) eingesteckten Stellung der Hülse (43) die axiale Länge der Überdeckung (L_{434/626}) zwischen der Stufe (434) mit dem größerenDurchmesser (D₄₃₄) der Hülse (43) und der Stufe (626) mit dem größeren Durchmesser (D₆₂₆) des Körpers (62) des Aufnahmeelements (6) größer ist als die axiale Länge der Überdeckung (L_{433/628}) zwischen der Stufe (433) mit dem kleineren Durchmesser (D₄₃₃) der Hülse (43) und der Stufe mit dem kleineren Durchmesser (D₆₂₈) des Körpers (62) des Aufnahmeelements (6).

16. Anordnung (12) zur elektrischen Verbindung nach einem der vorhergehenden Ansprüche, **dadurch gekennzeichnet, dass** eines von dem Einsteckelement (4) oder dem Aufnahmeelement (6) in elektrischer Verbindung mit einer Batterie (22) ist und das andere von dem Aufnahmeelement (6) oder dem Einsteckelement (4) in elektrischer Verbindung mit einer elektrischen Energiequelle (14) ist, die ein Kondensator oder ein elektrisches Verteilernetz sein kann.

17. Anordnung (12) zur elektrischen Verbindung nach einem der vorhergehenden Ansprüche, **dadurch gekennzeichnet, dass** das eine von dem Einsteckelement (4) oder dem Aufnahmeelement (6) an einem Fahrzeug (2) montiert ist und das andere von dem Aufnahmeelement (6) oder dem Einsteckelement (4) an einer feststehenden Ladestation (8) montiert ist.

18. Anordnung (12) zur elektrischen Verbindung nach Anspruch 17,
**dadurch gekennzeichnet, dass** das Einsteckelement (4) oder das Aufnahmeelement (6), das an dem Fahrzeug (2) montiert ist, mindestens einen zusätzlichen elektrischen Kontakt in Verbindung mit einer Steuereinheit (20) des Fahrzeugs (2) aufweist.

## Claims

1. Electrical connection assembly (12), including a female element (6) which includes at least one electrical contact (621, 622, 623), and a male element (4) intended to be inserted in the female element (6), the male element (4) including a plug (41) that extends along a longitudinal axis (A₄), a sleeve (43) that surrounds the plug (41) and that is mobile relative to the plug (41), and at least one electrical contact (412, 413, 414) that is carried by the plug (41) or the sleeve (43) and that is intended to be electrically connected to the electrical contact (621, 622, 623) carried by the female element (6), an exterior connection surface (S₄₁₂, S₄₁₃, S₄₁₄) of the electrical contact (412, 413, 414) of the male element (4) being covered by the sleeve (43) or the plug (41) in a first axial position of the sleeve (43) relative to the plug (41) and uncovered in a second axial position of the sleeve (43) relative to the plug (41), an external radial surface (436) of the sleeve (43) including at least two stages (433, 434) the diameters (D₄₃₃, D₄₃₄) of which decrease in the direction toward a free end (401) of the male element (4), and the female element (6) including a body (62) the internal radial surface (65) of which includes at least two stages (626, 628) the diameters (D₆₂₆, D₆₂₈) of which increase in the direction toward a mouth (63) of the female element (6),
**characterized in that** the external surfaces of the stages (433, 434) of the sleeve (43) are substantially complementary to the external surfaces of the stages (626, 628) of the internal surface (65) of the body (62) of the female element (6) and **in that** when the sleeve (43) is fully inserted in the female element (6) the stage (434) of larger diameter (D₄₃₄) of the male element (4) is engaged in the stage (626) of larger diameter (D₆₂₆) of the female element (6) and the stage (433) of smaller diameter (D₄₃₃) of the male element (4) is engaged in the stage (628) of smaller diameter (D₆₂₈) of the female element (6).

2. Electrical connection assembly (12) according to Claim 1, **characterized in that** the male element (4) includes a connecting element (42) for fixing to a support (242) an element (419) forming one end of the plug (41) or the sleeve (43) opposite the free end (401) and **in that** the connecting element (42) allows movement of the support (242) relative to the plug (41) or the sleeve (43) in at least one direction intersecting the longitudinal axis (A₄) of the plug (41).

3. Electrical connection assembly (12) according to Claim 2, **characterized in that** the connecting element (42) is an elastically deformable element and may be a spring.

4. Electrical connection assembly (12) according to Claim 2, **characterized in that** the connecting element (42) is articulated to the plug (41) or the sleeve (43).

5. Electrical connection assembly (12) according to any one of the claims 2 to 4, **characterized in that** the connecting element (42) is hollow to accommodate inside it at least one electrical cable (4120, 4130, 4140).

6. Electrical connection assembly (12) according to any one of the claims 2 to 5, **characterized in that** the connecting element (42) extends globally axially along the longitudinal axis (A₄) of the plug (41).

7. Electrical connection assembly (12) according to any one of the claims 2 to 6, **characterized in that** spring means are adapted to return the connecting element (42) to an initial position in which the connecting element (42) extends globally along the longitudinal axis (A₄) of the plug (41).

8. Electrical connection assembly (12) according to any of the preceding claims, **characterized in that** the male element (4) includes means (47) disposed axially between the sleeve (43) and an end element (419) of the plug (41) to urge (E₄₇) the sleeve (43) axially toward the first position of the sleeve (43) relative to the plug (41).

9. Electrical connection assembly (12) according to any of the preceding claims, **characterized in that** the male element (4) includes at least two electrical contacts in the form of parallel annular conductive tracks (412, 413, 414) disposed along the axis (A₄).

10. Electrical connection assembly (12) according to any of the preceding claims, **characterized in that** at least one electrical contact (412, 413, 414) of the male element (4) is on an external radial surface (415) of the plug (41).

11. Electrical connection assembly (12) according to any of the preceding claims, **characterized in that** the plug (41) projects axially from the sleeve (43) and constitutes the free end (401) of the male element (4).

12. Electrical connection assembly (12) according to any of the preceding claims, **characterized in that** the female element (6) includes a flap (68) mobile axially relative to the body (62) of the female element (6) between a first position in which the flap (68) covers the electrical contact (621, 622, 623) of the female element (6) and a second position in which the electrical contact is uncovered by the flap (68).

13. Electrical connection assembly (12) according to Claim 12, **characterized in that** the flap (68) has an axial side (662) disposed on the same side as the mouth (63) and that is made from a conductive material and **in that** one end of the plug (41) at the same end as the free end (401) of the male element (4) includes a conductive part (411).

14. Electrical connection assembly (12) according to either of Claims 12 or 13, **characterized in that** it includes at least one sensor (71, 72) that detects the mobile flap (68) in its second position and/or the sleeve (43) in a configuration fully inserted inside the female element (6) and **in that** a control unit (10) is adapted to control the supply of electrical power to at least one electrical contact (621, 622, 623) as a function of the output signal (S₇₁, S₇₂) of each sensor (71, 72).

15. Electrical connection assembly (12) according to any of the preceding claims, **characterized in that**, in the fully inserted configuration of the sleeve (43) inside the female element (6), the axial length (L_{434/626}) over which the stage (434) of larger diameter (D₄₃₄) of the sleeve (43) and the stage (626) of larger diameter (D₆₂₆) of the body (62) of the female element (6) overlap is greater than the axial length (L_{433/628}) over which the stage (433) of smaller diameter (D₄₃₃) of the sleeve (43) and the stage of smaller diameter (D₆₂₈) of the body (62) of the female element (6) overlap.

16. Electrical connection assembly (12) according to any of the preceding claims, **characterized in that** one element of the pair of elements comprising the male element (4) and the female element (6) is electrically connected to a battery (22) and the other element of the pair of elements comprising the female element (6) and the male element (4) is electrically connected to a source of electrical power (14) that may be a capacitor or an electrical distribution system.

17. Electrical connection assembly (12) according to any of the preceding claims, **characterized in that** one of the elements of the pair of elements comprising the male element (4) and the female element (6) is mounted on a vehicle (2) and the other element of the pair of elements comprising the female element (6) and the male element (4) is mounted on a fixed charging station (8).

18. Electrical connection system (12) according to Claim 17, **characterized in that** the male element (4) or the female element (6) that is mounted on the vehicle (2) includes at least one additional electrical contact connected to a control unit (20) of the vehicle (2).
